Europäisches Patentamt

European Patent Office

Office européen des brevets

(11) Veröffentlichungsnummer: **0 500 011 A1**

# EUROPÄISCHE PATENTANMELDUNG

(21) Anmeldenummer: **92102600.1**

(22) Anmeldetag: **17.02.92**

(51) Int. Cl.5: **G01F 1/712**, G01P 5/18

(30) Priorität: **21.02.91 LU 87893**

(43) Veröffentlichungstag der Anmeldung:
**26.08.92 Patentblatt 92/35**

(84) Benannte Vertragsstaaten:
**PT**

(71) Anmelder: **EUROPÄISCHE ATOMGEMEINSCHAFT (EURATOM)**
**Bâtiment Jean Monnet Plateau du Kirchberg**
**L-2920 Luxembourg(LU)**

(72) Erfinder: **Ohlmer, Eggert**
**22, Via Girolo**
**I-21027 Ispra(IT)**
Erfinder: **Wesser, Ulf**
**Kissinger Strasse**
**W-1000 Berlin(DE)**
Erfinder: **Hummel, Rudolf**
**16, Via Torino**
**I- Castelnetto Ticinio (NO)(IT)**

(74) Vertreter: **Weinmiller, Jürgen**
**Lennéstrasse 9 Postfach 24**
**W-8133 Feldafing(DE)**

(54) **Verfahren zur Messung der örtlichen Fliessgeschwindigkeit einer Flüssigkeitsströmung in einem Kanal.**

(57) Die Erfindung bezieht sich auf ein Verfahren zur Messung der örtlichen Fließgeschwindigkeit einer Flüssigkeitsströmung in einem Kanal (1), wobei in dem Kanal an zwei in Strömungsrichtung (4) hintereinander liegenden Stellen mit Hilfe je eines Thermoelements (2, 3) die Temperatur der Flüssigkeit gemessen wird. Erfindungsgemäß werden die Meßsignale der beiden Thermoelemente korreliert und daraus wird die Fließgeschwindigkeit abgeleitet.

Die Erfindung bezieht sich auf ein Verfahren zur Messung der örtlichen Fließgeschwindigkeit einer Flüssigkeitsströmung in einem Kanal, wobei in dem Kanal an zwei in Strömungsrichtung hintereinanderliegenden Stellen mit Hilfe je eines Thermoelements die Temperatur der Flüssigkeit gemessen wird.

Aus der EP-A-0 363 695 ist eine Meßsonde zur Erfassung niedriger Strömungsgeschwindigkeiten in einem Rohrabschnitt bekannt, bei der zwei Thermoelemente sich an in Strömungsrichtung hintereinanderliegenden Punkten befinden und elektrisch so in Reihe geschaltet sind, daß sie die Temperaturdifferenz zwischen den Punkten zu messen erlauben. Die Temperaturdifferenz wird von einem Heizelement erzeugt, das in den Rohrabschnitt hineinragt. Die Thermoelemente sind unmittelbar am Heizelement angebracht und messen somit dessen Temperatur, die natürlich auf der angeströmten Seite niedriger als auf der stromabwärts liegenden Seite ist.

Aufgabe der Erfindung ist es, ein Verfahren zur Messung der örtlichen Fließgeschwindigkeit einer Flüssigkeitsströmung in einem Kanal anzugeben, bei dem auf ein in die Strömung einzubringendes Heizelement verzichtet werden kann, das einerseits Energie verbraucht und die zu messende Strömung aufheizt und andererseits durch sein Vorhandensein im Strömungskanal die Messung verfälscht.

Diese Aufgabe wird erfindungsgemäß bei dem Verfahren der eingangs genannten Art dadurch gelöst, daß die Meßsignale der beiden Thermoelemente korreliert werden und daraus die Fließgeschwindigkeit abgeleitet wird.

Die Praxis zeigt, daß Flüssigkeitsströmungen thermisch praktisch nie ganz homogen sind. Tatsächlich ergeben sich immer ein Wärmeaustausch an den Kanalwänden mit der Umgebung und zugleich Turbulenzen aufgrund der Reibung der Strömung an den Kanalwänden, so daß sich immer wieder Strömungsballen, deren Temperatur sich von der mittleren Temperatur der Flüssigkeit unterscheidet, von den Wänden lösen und ein Stück weit mittreiben, ehe sich die Temperaturunterschiede durch Vermischung ausgleichen. Mißt man die Temperaturschwankungen an zwei in Strömungsrichtung hintereinanderliegenden Stellen des Kanals, dann kommt es gelegentlich vor, daß die beiden Thermoelemente ähnliche Signalverläufe erzeugen, die nur zeitlich gegeneinander verschoben sind. Wenn man nun diese ähnlichen Signalverläufe herausfindet und die Zeitverzögerung mißt, dann erkennt man unmittelbar die Fließgeschwindigkeit. Mit modernen Thermoelementen lassen sich mit nur geringer thermischer Verzögerung Temperaturschwankungen von 0,1K erfassen, wobei im vorliegenden Fall eine Absolutmessung der Temperatur gar nicht erforderlich ist. Auf der anderen Seite stehen heute digitale und analoge Korrelatoren zur Verfügung, die selbsttätig die Korrelation der Signale der beiden Thermoelemente durchführen und die Zeitverschiebung der korrelierten Signale ermitteln.

Auf diese Weise entfallen das aus dem Stand der Technik bekannte Heizelement und die mit ihm verbundenen Nachteile.

Die Erfindung betrifft auch eine Vorrichtung zur Durchführung dieses Verfahrens, die zwei in Strömungsrichtung hintereinanderliegende Thermoelemente, je einen jedem Thermoelement nachgeschalteten hochverstärkenden und rauscharmen Verstärker und einen Korrelator aufweist, der die verstärkten Signale miteinander korreliert.

Des weiteren enhält die Vorrichtung einen Mikrocomputer zur Steuerung der Signalverarbeitung und selbsttätigen Bewertung, Auswahl und Mittelung der Meßergebnisse.

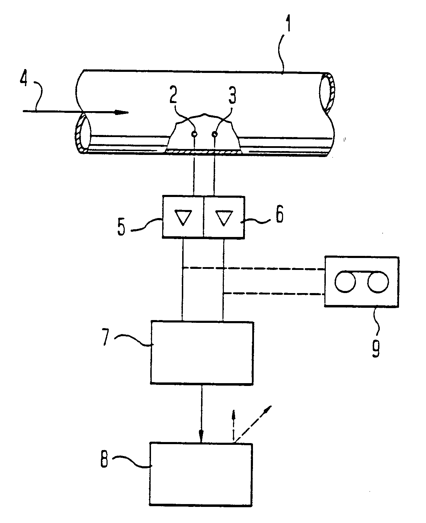

Nachfolgend wird die Erfindung an Hand eines bevorzugten Ausführungsbeispiels mit Hilfe der einzigen Zeichnung näher erläutert, die ein Blockdiagramm einer erfindungsgemäßen Vorrichtung zeigt.

Die Strömung, deren Geschwindigkeit V gemessen werden soll, fließt in einem Kanal 1, in den zwei Thermoelemente 2 und 3 hineinragen. Die Köpfe dieser Thermoelemente liegen in Fließrichtung hintereinander, wobei die Fließrichtung entweder in Richtung des Pfeils 4 oder in Gegenrichtung hierzu verlaufen kann.

Die Ausgangssignale der beiden Thermoelemente werden in je einem hochverstärkenden und rauscharmen Verstärker 5 und 6 auf Werte verstärkt, die kompatibel mit einem Korrelator 7 sind. Der Verstärker enthält Hochpass-Filter, um die konstanten Signalanteile, die der mittleren Flüssigkeitstemperatur entsprechen, zu unterdrücken; nur die fluktuierenden Signalanteile aus den Temperaturschwankungen der Flüssigkeitsströmung werden verstärkt. Weiter besitzt der Verstärker einen variablen Verstärkungsbereich, der sich selbsttätig der Signalgröße anpaßt, um bei unterschiedlichen Temperaturschwankungen die Ausgangssignale mit annähernd immer gleichem Größenbereich für den Korrelator zu liefern. Am Eingang des Korrelators befindet sich ein A-D-Wandler zur Umwandlung der beiden Signale in je eine Folge von Digitaldaten, die dann miteinander korreliert werden. Der Korrelator vergleicht den Signalverlauf der beiden Thermoelementsignale und ermittelt den zeitlichen Abstand von miteinander korrelierten Signalteilen. Dieser zeitliche Abstand ist umgekehrt proportional zur Geschwindigkeit der Strömung im Bereich der beiden Thermoelemente und direkt proportional zum Abstand der beiden Thermoelemente in der Strömung. Es empfiehlt sich deshalb, diesen Abstand für größere zu erwartende Geschwindigkeiten größer zu wählen als für kleinere Geschwindigkeiten.

Dem Korrelator ist ein Mikrocomputer oder ein Kleinrechner 8 nachgeschaltet, der das ganze System überwacht und die gemessenen Geschwindigkeitsdaten bewertet, verarbeitet und abspeichert. Die Bewertung kann beispielsweise darin bestehen, daß Korrelationsergebnisse, die sich stark von den übrigen unterscheiden, als Fehlmessungen interpretiert und von der Auswertung ausgeschlossen werden. Dieser Beseitigung von Fehlmessungen im Datenverarbeitungsprozess kommt eine besondere Bedeutung zu: Naturgemäß werden im Zeitverlauf gelegentlich auch nicht korrelierbare Signale aus der Strömung vom Korrelator erfaßt und zu Falschdaten verarbeitet. Beim vorliegenden Verfahren werden die Falschdaten anhand von physikalischen Plausibilitäts-Kriterien als solche erkannt und selbsttätig aus den Ergebnissen beseitigt. Erst hierdurch erreicht man die Zuverlässigkeit, die das Temperatur-Korrelationsverfahren für praktische Anwendungen brauchbar macht. Die Datenverarbeitung kann darin bestehen, daß zeitliche Mittelwerte der Geschwindigkeit aus den korrelierten Augenblickswerten errechnet werden, so daß auch auf die mittlere Geschwindigkeit der Strömung geschlossen werden kann.

Selbstverständlich können die ermittelten Werte sofort, d.h. im Rahmen der technisch gegebenen Zeitauflösung in Echtzeit, angezeigt, ausgedruckt oder unmittelbar zur Prozeßsteuerung herangezogen werden.

Es ist auch möglich, die Ausgangssignale der Thermoelemente 2 und 3 nach deren Verstärkung lediglich in einem Magnetbandgerät 9 abzuspeichern und erst später zu korrelieren, falls der Korrelator für eine gewünschte hohe zeitliche Auflösung im Echtzeitbetrieb nicht schnell genug arbeiten kann.

Bei einer weiteren möglichen Ausführungsform des erfindungsgemäßen Verfahrens liesse sich die Korrelationsanalyse der Signale auch in dem Mikrocomputer der Vorrichtung vornehmen. Hierbei wäre der Korrelatorteil in dem Mikrocomputer integriert und durch ein entsprechendes Rechenprogramm ersetzt.

Das erfindungsgemäße Verfahren ist nur anwendbar auf thermisch inhomogene Strömungen, wobei diese Bedingung angesichts der hochempfindlichen modernen Thermoelemente praktisch für eine Vielzahl technischer Anwendungen erfüllt ist. Die Thermoelemente lassen sich leicht auch an schwer zugänglichen Stellen eines Kanals anbringen und stören wegen ihrer schlanken Form die Strömung praktisch nicht. Mit dem erfindungsgemäßen Verfahren lassen sich Strömungsgeschwindigkeiten bis zum Stillstand herunter messen und auch eine Strömungsumkehr erfassen.

Die Erfindung ist insbesondere in Strömungskreisläufen verwendbar, in denen sich Wärmequellen oder Wärmesenken befinden, aber auch in solchen, die Dampf-Flüssigkeitsmischungen oder Abgase befördern.

**Patentansprüche**

1. Verfahren zur Messung der örtlichen Fließgeschwindigkeit einer Flüssigkeitsströmung in einem Kanal, wobei in dem Kanal an zwei in Strömungsrichtung hintereinander liegenden Stellen mit Hilfe je eines Thermoelements die Temperatur der Flüssigkeit gemessen wird, dadurch gekennzeichnet, daß die Meßsignale der beiden Thermoelemente korreliert werden und daraus die Fließgeschwindigkeit abgeleitet wird.

2. Vorrichtung zur Durchführung des Verfahrens nach Anspruch 1, dadurch gekennzeichnet, daß zwei Thermoelemente (2, 3) an zwei in Strömungsrichtung (4) hintereinanderliegenden Stellen in den Kanal (1) ragen, daß jedem Thermoelement ein hochverstärkender und rauscharmer Verstärker (5, 6) nachgeordnet ist und daß diese beiden Verstärker nur die fluktuierenden Signalanteile und zwar in immer gleicher Größenordnung als Ausgangssignale für die anschließende Verarbeitung liefern.

3. Vorrichtung nach Anspruch 2, dadurch gekennzeichnet, daß die Ausgangssignale der Verstärker einem A/D-Wandler zugeführt werden, dessen Daten der Korrelationsrechnung zugrundegelegt werden, aus der die Signal-Zeitverschiebung und damit die Strömungsgeschwindigkeit in einem Mikrocomputer ermittelt werden.

4. Vorrichtung nach Anspruch 3, dadurch gekennzeichnet, daß die ermittelten Geschwindigkeitsdaten durch ein Rechenprogramm im Mikrocomputer selbsttätig auf physikalische Plausibilität geprüft und gelegentliche Falschdaten dabei aus dem Endergebnis beseitigt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 232 719 (CENTRA-BÜRKLE GMBH) siehe Spalte 2, Zeilen 5-8 ; Spalte 6, Zeile 45- Spalte 7, Zeile 4; Figur 1 --- | 1 | G01F1/712 G01P5/18 |
| X | JOURNAL OF PHYSICS & SCIENTIFIC INSTRUMENTS Bd. 3, Nr. 8, August 1970, LONDON Seiten 589 - 593; K. P. TERMAAT: 'Fluid flow measurements inside the reactor vessel of the 50 MWe Dodewaard nuclear power plant by cross-correlation of thermocouple signals' * das ganze Dokument * --- | 1,2 | |
| X | PROCEEDINGS OF MELECOM'85 MEDITERRANEAN ELECTROTECHNICAL CONFERENCE Oktober 1985, MADRID Seiten 523 - 530; D. E. VENTZAS ET AL.: 'Design of transducers for thermal cross-correlation flowmeter' * das ganze Dokument * | 1-3 | |
| | ----- | | **RECHERCHIERTE SACHGEBIETE (Int. Cl.5)** G01F G01P |

Der vorliegende Recherchenbericht wurde für alle Patentansprüche erstellt

| Recherchenort | Abschlußdatum der Recherche | Prüfer |
|---|---|---|
| DEN HAAG | 18 MAI 1992 | ROSE A. R. P. |

EPO FORM 1503 03.82 (P0403)